# EUROPEAN PATENT APPLICATION

(11) **EP 2 068 171 A1**
(43) Date of publication of application: **10.06.2009**
(21) Application number: 08170774.7
(22) Date of filing: 05.12.2008
(51) Int. Cl.: G01S 7/521, G10K 9/122, G10K 9/22, B44C 1/10, B44C 1/14, G01S 15/93

(54) **Coloured sticker to cover a piezoelectric transducer of a vehicle parking aid system**

(30) Priority: 07.12.2007 IT MO20070377
(71) Applicant: Meta System S.p.A., 42100 Reggio Emilia (IT)
(72) Inventor: Mangano, Claudio, 21100 Varese (IT)
(74) Representative: Feltrinelli, Secondo Andrea

(57) **Abstract**

The device for detecting objects near vehicles, particularly usable in parking aid systems or the like, comprises a support associable with the bodywork of a vehicle, and a sensor associable with the support, electronically associable with a management and control unit on the vehicle and with a transmission/reception surface suitable for sending an output signal and/or receiving a reflected signal to detect objects near the vehicle.

The device comprises a covering element with a visible surface suitable for visually reproducing at least part of the surface of the bodywork of the vehicle and coupling means for coupling the covering element to the sensor on the transmission/reception surface.

## Description

This invention relates to a device for detecting objects near vehicles, particularly usable in parking aid systems or the like.

With particular reference to parking aid applications, equipping motor vehicles or the like is known with systems suitable for controlling and indicating to the driver the presence and/or the relative distance of objects near the motor vehicle during parking manoeuvres or, also, suitable for calculating and indicating the room available during such manoeuvre.

Such systems substantially permit carrying out manoeuvres in total safety, avoiding (or at least limiting) the danger of accidental collisions with external bodies, including in low-visibility conditions.

The known systems generally have a plurality of detection sensors of the type, e.g., of ultrasonic sensors, able to send a signal (for example, of the ultrasonic type) and to detect any echo signals reflected off one or more objects.

The detection sensors are commonly distributed at the front and/or rear bumpers, which are the parts of the motor vehicle most exposed to the risk of collision with external bodies, and are fastened to suitably-shaped supports, of the bracket, appendix type or the like, connected in a removable or non-removable way to the bumper.

The detection sensors are connected electrically by means of power leads to a processing and control unit such as, e.g., a conventional power unit for cars, to which they send a transduced electrical signal starting with the echo signals detected. Subsequent processing of the transduced electrical signal permits, e.g., defining the relative distance of the objects detected.

The management and control unit is associated with visual and/or sound interfacing means of the type, e.g., of a display screen placed on the dashboard of the motor vehicle, suitable for indicating to the driver the presence of the obstacle, the relative position of the obstacle or information of other type.

The known sensors are generally made up of a capsule comprising, inside, a transducer element of the type, e.g., of a piezoelectric transducer suitable for converting an electric signal into a respective ultrasonic signal and vice versa.

The capsule comprises a portion of surface suitable for transmitting and receiving ultrasonic signals, arranged facing outwards through an opening made in the bumper, and an opposite portion having an electronic connection element and facing towards the inside of the vehicle to make wiring operations easier.

The fitting phase of the detection sensors to the bumper, in particular, requires a first operation involving the fitting of the sensors themselves to the supports, then a second wiring operation in which the connector is operatively associated with the electronic connection element of the sensor, and in which such connector is subsequently connected to the management and control unit by means of the specific wire.

Once installed on the bumper of a motor vehicle, and in particular in the case of a painted bumper, these sensors are however unpleasant from a visual point of view, as they clearly stand out from the rest of the bodywork finish of the motor vehicle.

To avoid such problem, painting of the transmission/reception surface of each sensor is known, i.e. only of the portion of sensor surface that is visible following its installation on the bumper.

This procedure however has some drawbacks.

The sensor cannot in fact be painted at the same time as the bumper, after the installation of the sensor; this is due to the fact that when painting a bumper (and indeed generally a motor vehicle) several layers are applied (including primer, adhesion promoter, rust-proofing) prior to the final painting.

The application of such layers would create an excessive thickness on the transmission/reception surface, compromising the correct operation of the sensor.

The transmission/reception surface of the sensor must therefore be painted through the application of a very thin layer of paint, after the painting of the bumper or, in any case, prior to the installation of the bumper.

This leads to notably long execution times, as each sensor must be painted carefully before installation and the paint must dry and adhere well to the sensor before proceeding with the installation on the bumper.

Furthermore, the paint applied to the sensor may be very different from that applied to the bumper, leading to unacceptable visual results in the finish.

The main aim of this invention is therefore to provide a device for detecting objects near vehicles, particularly usable in parking aid systems or the like, which is visually adapted to the rest of the vehicle bodywork and which is simple and easy to install on the vehicle.

Another object of this invention is to provide a device for detecting objects near vehicles, particularly usable in parking aid systems or the like, which overcomes the above-described drawbacks of the prior art within a simple, rational solution that is easy and effective to use and low in cost.

The aforementioned objects are achieved by this device for detecting objects near vehicles, particularly usable in parking aid systems or the like, comprising at least a support associable with the bodywork of a vehicle, and at least a sensor associable with said support, electronically associable with at least a management and control unit on said vehicle and with at least a transmission/reception surface suitable for sending an output signal and/or receiving a reflected signal to detect objects near said vehicle, characterised by the fact that it comprises at least a covering element with a visible surface suitable for visually reproducing at least part of the surface of the bodywork of said vehicle and coupling means for coupling said covering element to said sensor on said transmission/reception surface.

Other characteristics and advantages of this invention will become more evident from the description of a form of preferred, but not sole, embodiment, of a device for detecting objects near vehicles, particularly usable in parking aid systems or the like, illustrated purely as an example but not limited to the annexed drawings in which:
the figure 1 is an axonometric and exploded view of the device according to the invention;
the figure 2 is an axonometric view of the device according to the invention in an assembly configuration;
the figure 3 is a top plan view of a kit for the finishing of a device according to the invention, usable during the assembly of said device.

With particular reference to these figures, 1 is used generally to indicate a device for detecting objects that is installable on a vehicle and, in particular, usable in parking aid systems or the like.

The device 1 comprises a support 2 associable with the bodywork of a vehicle and with which, in an assembly configuration, a sensor 3 is associated, which is adapted to detect objects near the vehicle.

In particular, the sensor 3 may be of the known ultrasound type, comprising a capsule containing a transducer element such as, e.g., a piezoelectric transducer suitable for converting an electric signal into a respective ultrasonic signal and vice versa.

The capsule of the sensor 3 is substantially cylindrical and has a substantially flat transmission/reception surface 4 suitable for sending an ultrasound signal and receiving a reflected signal from one or more objects located near the vehicle.

The sensor 3 also comprises a pair of metallic connectors, not illustrated in the figures as they are known, defined protruding from a surface of the capsule that is substantially opposite the transmission/reception surface 4, which are connected to the transducer and which can be associated electronically with the management and control unit on the vehicle.

With reference to the use of the device 1 in parking aid systems, the support 2 can be fixed to the front or rear bumper of a motor vehicle, with the transmission/reception surface 4 of sensor 3 arranged facing outwards, through an opening obtained on the bumper, and with the aforementioned metallic connectors extending inwards.

In particular, the support 2 comprises connection means 5 which, in the aforementioned assembly configuration, assure the electronic connection between the metallic connectors of the sensor and the electronic transmission means, of the type of a conductor cable or the like, connected to the management and control unit.

The management and control unit, not illustrated in the aforementioned figures as they are of a known type, can be composed of a control unit installed inside the cabin of the vehicle and associated with interfacing means of the visual or sound type, composed of, e.g. a display screen and suitable for indicating to the driver the presence of the obstacle, the relative position of the obstacle or information of other type.

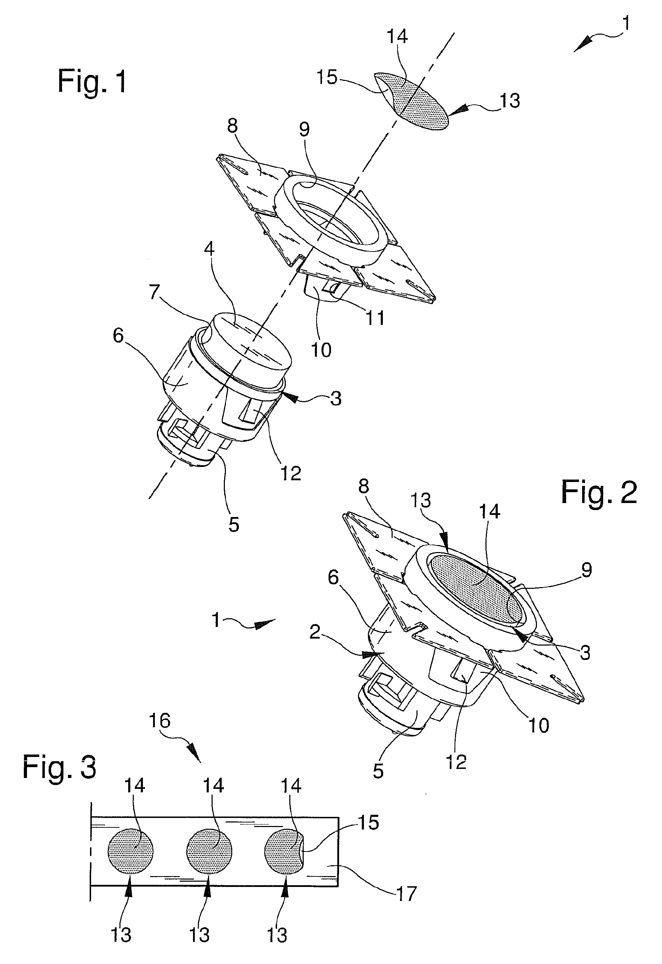

In the particular embodiment of the device 1 illustrated in the aforementioned figures 1 and 2, the connection means 5 of the support 2 are made of a protruding portion which is connectable in a removable manner and by interlocking onto a complementary connector arranged at one end of the conductor cable connected to the control unit. Different conformations of the connection means 5 are however not excluded.

The support 2 comprises a body 6 which partially houses the sensor 3, which has a first opening 7 from which extends outwards the portion of the sensor 3 fitted with the transmission/reception surface 4.

Usefully, the sensor 3 can comprise an elastic seal defined on the side surface of the external capsule suitable for engaging onto the internal surface of the body 6 of the support 2, in the assembly configuration, to assure greater adhesion between the sensor 3 and the support 2.

Furthermore, the support 2 has a plate 8 which can be fixed to the bumper of the vehicle and which can be associated with the housing body 6 of the sensor 3 in a removable manner, e.g., through by the interposition of fixing means of the clip-on, threaded type or the like, or in a fixed manner, through gluing, welding operations or the like.

The plate 8 has a second opening 9, which is circular and passing through, suitable for being positioned in a manner that is substantially aligned with the first opening 7 in order to allow, in the assembly configuration, the insertion of at least a portion of the sensor 3 protruding from the housing body 6, with the transmission/reception surface 4 arranged facing outwards.

In the particular embodiment illustrated in figures 1 and 2, anchoring means of a clip-on type are provided to fix the plate 8 to the housing body 6, which comprise a pair of elastic wings 10 which extend substantially at right angles to the plate 8 and which are fitted with respective slots 11 suitable for being engaged by corresponding retainer teeth 12 defined on the side surface of the body 6.

Advantageously, the device 1 comprises a covering element 13, having a visible surface 14 suitable for visually reproducing at least part of the surface of the bodywork of the vehicle, and coupling means to couple the covering element 13 to the transmission/reception surface 4 of the sensor 3.

More specifically, with particular reference to motor vehicles with painted bumpers, the visible surface 14 reproduces the colour and appearance generally of the paint on the bumper on which the device 1 is installed.

The covering element 13 is substantially plate-shaped and comprises a substantially flat visible surface 14 and a rear portion 15, composed of a flat surface, which is associated with the transmission/reception surface 4 of the sensor 3 by the interposition of said coupling means.

The outline of the covering element 13 reproduces the outline of the transmission/reception surface 4 of the sensor 3; in this way it assures the complete coverage thereof in the assembly configuration. In the assembly configuration, the device 1, in particular the transmission/reception surface 4 which is arranged facing out through the special opening on the bumper, is therefore indistinguishable (or in any case unrecognisable) from the rest of the bumper.

Usefully, the covering element 13 can be made using rigid or flexible material and the coupling means can be of the interlocking type or, alternatively, may be fixed using glues or the like.

Not with exclusive reference to the particular form of embodiment of the device 1 illustrated in figures 1 and 2, the covering element 13 is made of a flexible sheet of paper material, suitable plastic-coated to improve its resistance to external atmospheric agents, in which the visible surface 14 and the rear portion 15 are made of the opposing faces of said sheet and in which said coupling means are made of a layer of adhesive material applied over the whole of the rear portion 15.

In the assembly configuration, therefore, the layer of adhesive material distributed on the rear portion 15 adheres to the transmission/reception surface 4 of the sensor 3.

Prior to the assembly of the device 1, one or more covering elements 13 may be available in a kit 16, illustrated schematically in figure 3.

The kit 16 comprises a plurality of covering elements 13, the rear portion 15 of which, and therefore the layer of adhesive material distributed over it, is associated in a removable way with a protective film 17.

During the assembly of the device 1, each of the covering elements 13 can be removed from the protective film 17 to be applied to the transmission/reception surface 4 of the sensor 3.

Different forms of embodiment of the covering element 13 are not excluded, and may foresee different conformations, the use of different materials and different coupling means to the sensor 4 and/or the support 2.

It has in practice been seen how the invention described achieves the proposed objects, and in particular underlines the fact that the covering element is easy to apply and allows the device to be visually adapted to the rest of the bodywork of the vehicle on which it is installed.

The covering element, furthermore, can be applied at any time to the transmission/reception surface of the sensor, even after the installation of the device on a vehicle.

The invention thus conceived is susceptible to numerous modifications and variations, all of which falling within the scope of the inventive concept.

Furthermore all the details can be replaced with others that are technically equivalent.

In practice, the materials used, as well as the contingent shapes and dimensions, may be any according to requirements without because of this moving outside the protection scope of the following claims.

## Claims

1. Device for detecting objects near vehicles, particularly usable in parking aid systems or the like, comprising at least a support associable with the bodywork of a vehicle, and at least a sensor associable with said support, electronically associable with at least a management and control unit on said vehicle and with at least a transmission/reception surface suitable for sending an output signal and/or receiving a reflected signal to detect objects near said vehicle, **characterised by** the fact that it comprises at least a covering element with a visible surface suitable for visually reproducing at least part of the surface of the bodywork of said vehicle and coupling means for coupling said covering element to said sensor on said transmission/reception surface.

2. Device according to claim 1, **characterised by** the fact that said covering element comprises at least a rear portion substantially opposite said visible surface and associable with said transmission/reception surface of the sensor by the interposition of said coupling means.

3. Device according to one or more of the previous claims, **characterised by** the fact that said coupling means comprise interlocking means or the like.

4. Device according to one or more of the previous claims, **characterised by** the fact that said coupling means comprise adhesive materials or the like.

5. Device according to one or more of the previous claims, **characterised by** the fact that at least one between said visible surface and said rear portion of the covering element is substantially flat.

6. Device according to one or more of the previous claims, **characterised by** the fact that said covering element is substantially plate-shaped.

7. Device according to one or more of the previous claims, **characterised by** the fact that the outline of said covering element reproduces at least in part the outline of said transmission/reception surface of the sensor.

8. Device according to one or more of the previous claims, **characterised by** the fact that said coupling means comprise at least a layer of adhesive material applied over at least a part of said rear portion.

9. Device according to one or more of the previous claims, **characterised by** the fact that said covering element is made using a substantially rigid material.

10. Device according to one or more of the previous claims, **characterised by** the fact that said covering element is made using a substantially flexible material.

11. Device according to one or more of the previous claims, **characterised by** the fact that said covering element comprises at least a flexible sheet.

12. Device according to one or more of the previous claims, **characterised by** the fact that said flexible sheet is made at least in part using a paper material or the like.

13. Device according to one or more of the previous claims, **characterised by** the fact that said visible surface and said rear portion are made of the opposing faces of said flexible sheet.

14. Kit for the finishing of a device for detecting objects near vehicles, particularly usable in parking aid systems or the like, **characterised by** the fact that it comprises at least a covering element with a visible surface suitable for visually reproducing at least part of the surface of the bodywork of a vehicle and coupling means for coupling said covering element on a transmission/reception surface of a device for detecting objects installable on said vehicle.

15. Kit according to claim 14, **characterised by** the fact that said covering element comprises at least a rear portion substantially opposite said visible surface and associable with said transmission/reception surface of the device by the interposition of said coupling means.

16. Kit according to one or more of the claims 14 and 15, **characterised by** the fact that said coupling means comprise interlocking means or the like.

17. Kit according to one or more of the claims from 14 to 16, **characterised by** the fact that said coupling means comprise adhesive materials or the like.

18. Kit according to one or more of the claims from 14 to 17, **characterised by** the fact that at least one between said visible surface and said rear portion of the covering element is substantially flat.

19. Kit according to one or more of the claims from 14 to 18, **characterised by** the fact that said covering element is substantially plate-shaped.

20. Kit according to one or more of the claims from 14 to 19, **characterised by** the fact that said coupling means comprise at least a layer of adhesive material applied over at least a part of said rear portion.

21. Kit according to one or more of the claims from 14 to 20, **characterised by** the fact that said covering element is made using a substantially rigid material.

22. Kit according to one or more of the claims from 14 to 21, **characterised by** the fact that said covering element is made using a substantially flexible material.

23. Kit according to one or more of the claims from 14 to 22, **characterised by** the fact that said covering element comprises at least a flexible sheet.

24. Kit according to one or more of the claims from 14 to 23, **characterised by** the fact that said visible surface and said rear portion are made of the opposing faces of said flexible sheet.

25. Kit according to one or more of the claims from 14 to 24, **characterised by** the fact that it comprises at least a protective film associated in a removable way with said layer of adhesive material on said rear portion.

26. Kit according to one or more of the claims from 14 to 25, **characterised by** the fact that it comprises a plurality of said covering elements associated in a removable way with said protective film.
